# FASCICULE DE BREVET EUROPEEN

(11) **EP 3 116 724 B1**
(45) Date de publication et mention de la délivrance du brevet: **20.11.2019**
(21) Numéro de dépôt: 15709157.0
(22) Date de dépôt: 10.03.2015
(51) Int. Cl.: B60C 11/03, B60C 11/12, B60C 11/24, B60C 11/00

(54) **PNEUMATIQUE COMPORTANT UNE TEXTURE A FORT CONTRASTE SUR LA SURFACE DE ROULEMENT**
REIFEN MIT HOCHKONTRASTTEXTUR AUF DER LAUFFLÄCHE
TYRE INCLUDING A HIGH-CONTRAST TEXTURE ON THE TREAD SURFACE

(30) Priorité: 10.03.2014 FR 1451918
(43) Date de publication de la demande: 18.01.2017
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR); DESVIGNES, Jean-Claude, F-63040 Clermont-Ferrand Cedex 9 (FR); VILLENEUVE, Bernard, F-63040 Clermont-Ferrand Cedex 9 (FR); GUEUGNEAU, Anthony, F-63040 Clermont-Ferrand Cedex 9 (FR); LEJEUNE, Jonathan, F-63040 Clermont-Ferrand Cedex 9 (FR); BESSET, Julien, F-63040 Clermont-Ferrand Cedex 9 (FR)
(74) Mandataire: Demaure, Pierre-Yves
(86) Numéro de dépôt international: PCT/EP2015/054939
(87) Numéro de publication internationale: WO 2015/135930

(56) Documents cités:
- WO-A1-2007/045425
- US-A- 2 716 435
- US-A- 3 856 067
- US-A1- 2011 220 256

## Description

### DOMAINE DE L'INVENTION

La présente invention concerne un pneumatique pour véhicule automobile comportant une bande de roulement, ladite bande de roulement comportant une surface de roulement.

### ETAT DE LA TECHNIQUE

Afin de mouler la bande de roulement d'un pneumatique, il est connu d'utiliser des éléments moulants fixés dans un moule. Par élément moulant, on entend tout élément du moule qui comporte une surface de moulage permettant de mouler une partie de la bande de roulement d'un pneumatique. Un élément moulant peut être ainsi un bloc assemblé sur un secteur du moule ou bien un cordon rapporté sur la surface radialement intérieure du moule.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre sont ensuite agglomérés par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couche et de fusion par laser, on construit couche par couche un objet fritté.

Un tel objet fritté est notamment représenté à la **figure 3** du document EP0868955. Sur cette figure, on distingue aisément la structure en strates de l'objet fritté qui est un élément moulé destiné à être rapporté dans un moule pour pneumatique. Or cette structure en strates fait apparaître sur la surface de roulement du pneumatique moulé, des lignes de niveau qui sont le reflet de cette structure. Ce phénomène de lignes de niveau est augmenté par le caractère curviligne du moule. Ces lignes de niveau donnent au pneumatique un aspect peu esthétique.

Le document US2011/220256 divulgue une bande de roulement comprenant au moins un bloc de gomme pourvu d'incisions et de protubérances.

Le document WO2007/045425 divulgue un pneumatique pourvu d'une texture particulière sur un flanc.

Le document US2716435 divulgue un pneumatique comportant une bande de roulement pourvue d'une pluralité d'incisions.

Le document US3856067 divulgue un pneumatique comportant une bande de roulement pourvue d'une pluralité de creux.

Il existe donc un besoin de proposer une solution permettant de conserver l'utilisation du procédé de frittage laser pour fabriquer le moule servant à mouler le pneumatique tout en essayant d'améliorer l'esthétisme du pneumatique.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « texture », on entend un groupement organisé d'éléments.

Par « flanc » d'un pneumatique, on entend une surface latérale du pneumatique disposée entre la bande de roulement du pneumatique et un bourrelet de ce pneumatique.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

### RESUME DE L'INVENTION

L'invention concerne un pneumatique en matériau caoutchoutique comprenant une bande de roulement. Cette bande de roulement comporte une surface de roulement destinée à entrer en contact avec une chaussée lorsque le pneumatique roule, cette surface de roulement présentant vue en coupe une certaine courbure. La surface de roulement comprend sur au moins 80% de sa surface une texture faisant contraste avec le reste du pneumatique, cette texture comportant une pluralité d'éléments en protubérance ou en creux par rapport à la surface de roulement et chaque élément s'étend perpendiculairement à la surface de roulement le long de la courbure de cette surface de roulement.

En utilisant une texture sur la surface de la bande de roulement, on masque ainsi la présence de lignes de niveau sur cette surface.

Par ailleurs, la texture formée par les éléments en protubérance ou en creux permet de « piéger » tout ou partie des rayons lumineux incidents qui rencontrent la surface de la bande de roulement. Ceci permet de donner un aspect plus noir à cette surface de roulement et en conséquence cela permet d'améliorer son contraste et donc sa visibilité par rapport au reste du pneumatique.

La texture présente une luminosité, dite première luminosité L^{∗}1, comprise entre 6 et 15, et de préférence entre 8 et 9, et le reste du pneumatique présente une luminosité, dite seconde luminosité L^{∗}2, supérieure ou égale à 18 et inférieure ou égale à 30.

De cette manière, on s'assure que la texture présente un fort contraste vis-à-vis du reste du pneumatique. Par « luminosité », on entend le paramètre qui caractérise la capacité d'une surface à réfléchir la lumière. La luminosité est ici exprimée selon une échelle allant de 0 à 100 en accord avec le modèle colorimétrique L^{∗}a^{∗}b^{∗} adoptée en 1976 par la Commission Internationale de l'Eclairage (CIE). La valeur 100 représente le blanc ou la réflexion totale ; la valeur 0, le noir ou l'absorption totale.

Les valeurs de luminosité L^{∗}1 L^{∗}2 sont déterminées à l'aide d'un spectro-colorimètre, par exemple un spectro-colorimètre CM 700D de la marque KONICA-MINOLTA. On positionne cet appareil sur la texture et on vient mesurer la luminosité L^{∗}1 de cette texture. Cette mesure est notamment effectuée avec le mode SCI (Mode de réflexion spéculaire incluse) paramétré à un angle de 10° et un réglage de la lumière de type D65 (réglage défini selon la CIE).

De la même manière, on vient positionner l'appareil sur une autre partie du pneumatique pour déterminer une luminosité L^{∗}2. Afin d'améliorer, la détermination de cette luminosité L^{∗}2, il est possible d'effectuer une pluralité de mesures sur le pneumatique et d'en déduire une luminosité moyenne associée au reste du pneumatique. On notera que le reste du pneumatique constitue les zones du pneumatique non recouvertes par la texture selon l'invention, par exemple le flanc de ce pneumatique.

Dans une variante de réalisation non limitative, au moins 30% des éléments en protubérance de la texture fait un angle α supérieur à 40° par rapport à un plan tangent à la surface de roulement et au plus 25% des éléments en protubérance de la texture fait un angle α inférieur à 20° par rapport au plan tangent. On améliore ainsi davantage la capacité de la texture à piéger la lumière.

Dans un variante de réalisation non limitative, tout ou partie des éléments en protubérance sont des brins répartis dans la texture selon une densité au moins égale à un brin par millimètre carré (mm²), chaque brin ayant une section moyenne comprise entre 0,003 mm² et 1 mm².

Dans une autre variante de réalisation non limitative, tout ou partie des éléments en protubérance sont des lamelles sensiblement parallèles entre elles, le pas des lamelles dans la texture étant au plus égal à 0,5 mm, chaque lamelle ayant une largeur moyenne comprise entre 0,03 mm et 0,25 mm.

Dans une autre variante de réalisation non limitative, tout ou partie des éléments en protubérance forme des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0,5 mm.

Dans une autre variante de réalisation non limitative, les éléments en protubérance présentent dans la texture des formes et des distances entre éléments en protubérances variables.

Cela permet de créer de l'aléatoire dans la texture, ce qui permet de rendre moins visible ces éléments.

Dans un deuxième mode de réalisation non limitatif, les éléments en creux forment des ouvertures sur la surface de roulement et la texture comprend une pluralité d'ouvertures, lesdites ouvertures étant réparties dans la texture selon une densité au moins égale à une ouverture par millimètre carré (mm²), ces ouvertures présentant sur la surface de roulement des diamètres équivalents compris entre 0,03 mm et 1,2 mm.

La texture présente ainsi une plus grande pérennité. En effet, comme cette texture est composée d'éléments en creux par rapport à la surface de la bande de roulement, l'impact de frottements d'une chaussée sur cette texture est plus faible.

Dans un autre mode de réalisation, la texture présente sur la surface de roulement s'étend sur un flanc du pneumatique.

Dans un mode de réalisation préférentiel, la texture forme sur le flanc du pneumatique des moyens d'indication de surcharge et/ou de sous gonflage de ce pneumatique.

Ces moyens d'indications de surcharge et/ou de sous gonflage se présentent sous la forme d'une pluralité de zones texturées sur le flanc, séparées par des zones non texturées, les zones texturées du flanc prolongeant la texture présente sur la surface de roulement du pneumatique. Il est ainsi possible pour un observateur de déterminer plus facilement, à l'arrêt, les conditions dans lequel se trouve le pneumatique. Si la partie du flanc comportant les zones texturées interrompues par les zones non texturées est visible, le pneu peut être considéré comme étant dans de bonnes conditions d'utilisation. A l'inverse, si cette partie du flanc est non visible, cela indique que le pneumatique peut être dans un état de surcharge et/de sous gonflage.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'une partie d'un pneumatique comportant une bande de roulement conforme à l'art antérieur ;
- la **figure 2** représente schématiquement une vue en perspective d'une partie d'un pneumatique comportant une texture particulière sur la surface de la bande de roulement, conformément à l'invention ;
- la **figure 3** représente une partie de la texture de la **figure 2**, selon une première variante de réalisation non limitative d'un premier mode de réalisation de ladite texture selon lequel la texture présente des éléments en protubérance ;
- la **figure 4** représente une partie de la texture de la **figure 2**, selon une deuxième variante de réalisation non limitative d'un premier mode de réalisation de ladite texture selon lequel la texture présente des éléments en protubérance ;
- la **figure 5** représente une partie de la texture de la **figure 2**, selon une troisième variante de réalisation non limitative d'un premier mode de réalisation de ladite texture selon lequel la texture présente des éléments en protubérance ;
- la **figure 6** représente une partie de la texture de la **figure 2**, selon une quatrième variante de réalisation non limitative d'un premier mode de réalisation de ladite texture selon lequel la texture présente des éléments en protubérance ;
- la **figure 7** représente une partie de la texture de la **figure 2**, selon un deuxième mode de réalisation de ladite texture selon lequel la texture présente des éléments en creux ; et
- la **figure 8** représente une vue agrandie d'une cavité d'un élément en creux de la texture de la **figure 7****.**
- la **figure 9** présente une cinquième variante de réalisation dans lequel la texture s'étend sur un flanc du pneumatique de la **figure 2** ;
- la **figure 10** présente une sixième variante de réalisation de l'invention.

Dans la description qui va suivre, des éléments sensiblement identiques ou similaires seront désignés par des références identiques.

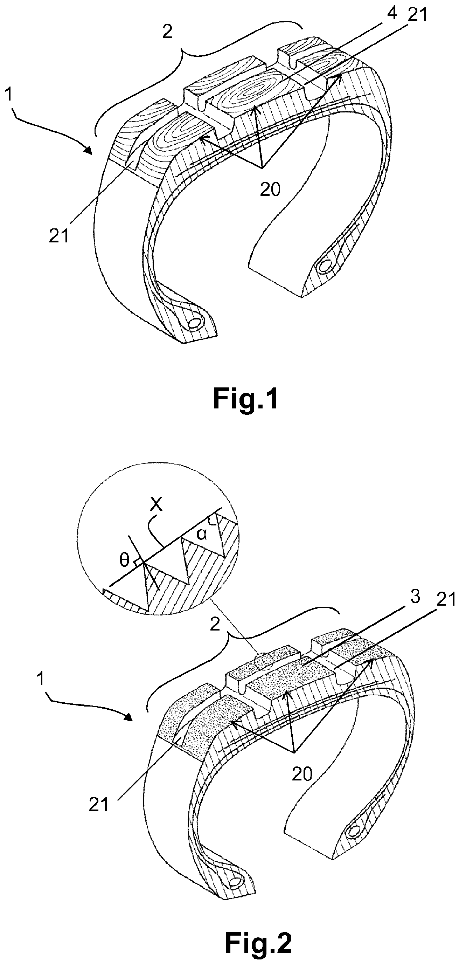

La **figure 1** représente une partie du pneumatique 1 comportant une bande de roulement 2 selon l'art antérieur. Comme on peut le voir, la bande de roulement 2 comporte une surface de roulement 20 et des rainures 21. En raison du procédé de frittage laser utilisé, l'ensemble de la surface de roulement 20 comporte des lignes de niveau 4.

La **figure 2** représente une partie du pneumatique 1 comportant une bande de roulement 2 selon l'invention. La bande de roulement 2 comporte une surface de roulement 20 et des rainures 21. La surface de roulement 20 comporte sur au moins 80% de sa surface une texture 3 faisant contraste avec le reste du pneumatique 1, notamment le flanc du pneumatique 1. Dans l'exemple illustré, la texture 3 s'étend sur l'ensemble de la surface de roulement 20 et cache l'ensemble des lignes de niveau 4.

Selon un premier mode de réalisation non limitatif de la texture 3, la texture 3 comprend une pluralité d'éléments en protubérance par rapport à la surface de roulement 20. L'effet de ces éléments en protubérance est de « piéger » une grande quantité des rayons lumineux incidents qui rencontrent la texture 3. Dans ce premier mode de réalisation, la texture 3 (appelée « velours ») permet d'obtenir, d'une part, un visuel de type « velours » car les éléments en protubérance absorbent la lumière et rendent ainsi la surface de roulement 20 plus noire, et d'autre part, un toucher de type « velours », lesdits éléments en protubérance procurant une surface de roulement 20 agréable au toucher.

Par ailleurs, selon une variante de réalisation non limitative, au moins 30% des éléments en protubérance de la texture 3 fait un angle α supérieur à 40° par rapport à un plan tangent X à la surface de roulement et au plus 25% des éléments en protubérance de la texture fait un angle α inférieur à 20° par rapport au plan tangent X. Sur la partie en zoom de la texture 3 de la **figure 2** sont illustrés schématiquement les éléments en protubérance, ledit plan tangent X et ledit angle a. On notera que l'angle α est l'angle entre le plan tangent X et le côté des éléments en protubérance. Cette variante s'applique pour les éléments en protubérance 6 et 7 décrits ci-après.

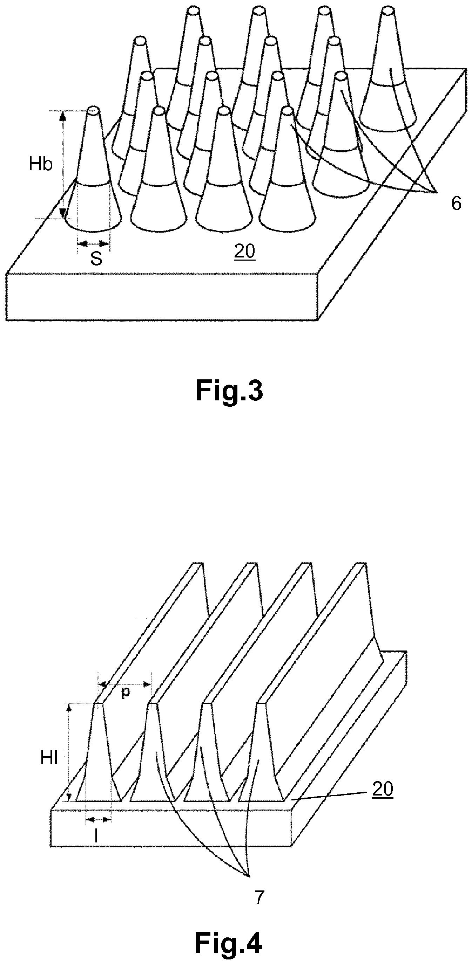

La **figure 3** illustre la texture 3 selon une première variante de réalisation non limitative du premier mode de réalisation. Dans cette variante, tout ou partie des éléments en protubérance sont des brins 6 répartis dans la texture 3 selon une densité au moins égale à un brin par millimètre carré (mm²), chaque brin ayant une section moyenne S comprise entre 0,003 mm² et 1 mm². On notera que la section moyenne de chaque brin correspond à la moyenne des sections S mesurées à intervalles réguliers depuis la base du brin. Les brins 6 ont une forme globalement conique avec une section diminuant dans la hauteur Hb de ces brins.

La **figure 4** illustre la texture 3 selon une deuxième variante de réalisation non limitative du premier mode de réalisation. Dans cette variante, tout ou partie des éléments en protubérance sont des lamelles 7 sensiblement parallèles entre elles, le pas P des lamelles dans la texture étant compris entre 0,1 mm et 0,5 mm, chaque lamelle 7 ayant une largeur moyenne comprise entre 0,03 mm et 0,25 mm. On notera que la largeur moyenne correspond à la moyenne des largeurs 1 mesurées à intervalles réguliers dans la hauteur Hl de la lamelle, la hauteur de chaque lamelle étant comprise entre 0,05 et 0,5 mm.

Dans une autre variante de réalisation, la texture comporte une combinaison de brins 6 et de lamelles 7.

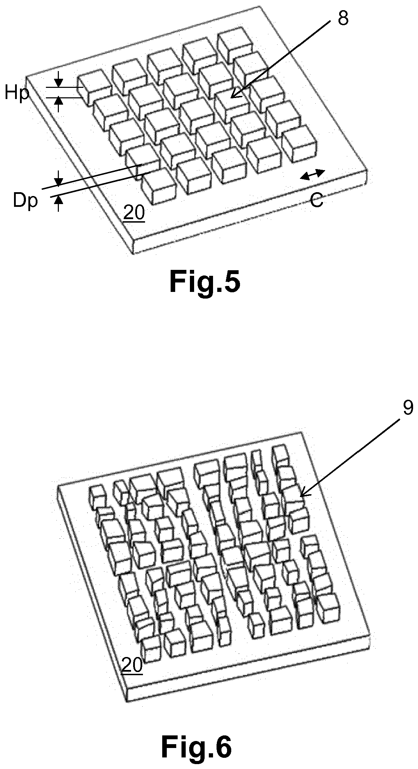

La **figure 5** illustre la texture 3 selon une troisième variante de réalisation non limitative du premier mode de réalisation. Dans cette variante, tout ou partie des éléments en protubérance forme des parallélépipèdes 8 de côté C compris entre 0,05 mm et 0,5 mm, de hauteur Hp comprise entre 0,05 mm et 0,5 mm, la distance Dp entre deux parallélépipèdes adjacents 8 dans la texture étant comprise entre 0,05 mm et 0.5 mm.

Dans une autre variante de réalisation, la texture comporte une combinaison des éléments en relief 6, 7 et 8, ou 6 et 8, ou encore 7 et 8 décrits ci-dessus.

La **figure 6** illustre la texture 3 selon une quatrième variante de réalisation non limitative du premier mode de réalisation. Dans cette variante, les éléments en protubérance 9 présentent dans la texture 3 des formes et des distances entre éléments en protubérance variables. Cette variante permet de rendre moins visible les éléments en protubérance sur la texture 3.

Selon un deuxième mode de réalisation non limitatif de la texture 3, la texture 3 comprend une pluralité d'éléments en creux 10 (appelés également trous) par rapport à la surface de roulement 20. Les éléments en creux 10 sont composés d'ouvertures 11 sur la surface de roulement 20 et de cavités 12 associées s'étendant dans la profondeur de la surface de roulement 20.

Ainsi, la texture 3 comprend une pluralité d'ouvertures 11 dans la surface de roulement 20, lesdites ouvertures 11 étant réparties dans la texture 3 selon une densité au moins égale à une ouverture par millimètre carré (mm²) et présentant sur la surface de roulement des diamètres Dt équivalents compris entre 0,03 mm et 1,2 mm.

Dans un mode de réalisation non limitatif, les ouvertures 11 occupent au moins 30% de la texture 3.
Selon d'autres modes de réalisation non limitatifs, les ouvertures 11 occupent au moins 50% de la texture 3, voire plus de 70%. On notera que plus le taux d'occupation des ouvertures sur la texture est important, meilleur est le masquage des lignes de niveau issues du procédé de moulage, et meilleure est la qualité de contraste de cette texture par rapport au reste de la bande de roulement.

Les ouvertures 11 se prolongent dans la profondeur de la surface de roulement 20 pour former des cavités 12.

L'effet de ces cavités 12 est de « piéger » une grande quantité des rayons lumineux incidents qui rencontrent la texture 3, mais également d'offrir une plus grande pérennité de la texture 3. En effet, comme les cavités 12 sont en creux dans la surface de roulement 20, l'impact des agressions mécaniques sur la texture, tels que des frottements d'une chaussée est plus faible que pour des protubérances. Dans ce deuxième mode de réalisation, la texture 3 (appelée « velours ») permet d'obtenir un visuel de type « velours » car les cavités absorbent la lumière et rendent ainsi la surface de roulement 20 plus noire.

Dans un mode de réalisation non limitatif, tout ou partie des cavités 12 a une profondeur au moins égale à 0.1mm. Dans une variante de réalisation non limitative, tout ou partie des cavités 12 a une profondeur comprise entre 0.2 mm et 0.6 mm. De cette manière, on s'assure qu'une grande quantité de rayons lumineux incidents qui rencontre la texture 3 est piégée par ladite texture et, comme la profondeur des cavités est limitée, on évite également de trop dégrader la résistance mécanique de la surface de roulement 20.

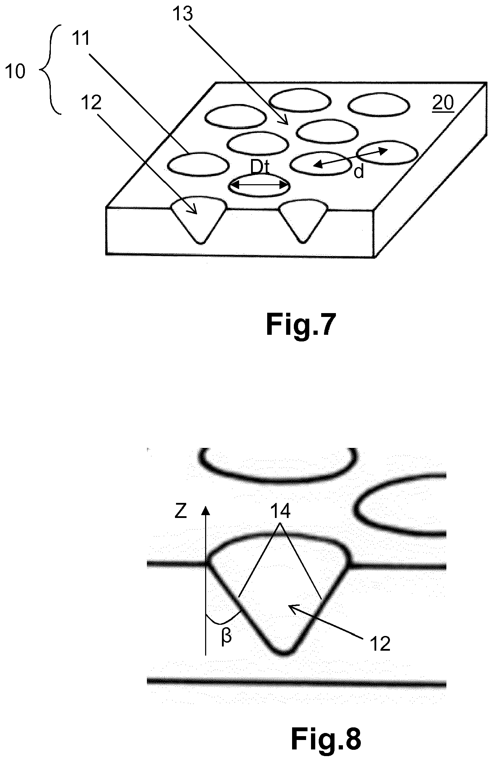

La **figure 7** illustre la texture 3 selon une première variante non limitative de ce deuxième mode de réalisation. Dans cette variante, tout ou partie des cavités 12 sont en forme de cônes qui s'étendent dans la profondeur de la surface de roulement 20 et débouchent sur la surface de roulement en formant des ouvertures circulaires 11. Les cavités 12 ont ainsi une section qui diminue dans la profondeur de la surface de roulement 20. De cette manière, on améliore le contraste de la texture 3 et donc de la surface de roulement 20 par rapport au reste de la bande de roulement 2. On notera que dans cette variante, les ouvertures 11 des cavités 12 ne se touchent pas. Les ouvertures 11 sont séparées par des zones intermédiaires 13. En outre, les ouvertures 11 sont régulièrement réparties sur tout ou partie de la surface de roulement 20 de sorte que la distance d entre chaque ouverture de la texture est globalement similaire.

La **figure 8** est un zoom sur une cavité 12 d'un élément en creux 10 de la texture de la **figure 7****.** Dans un mode de réalisation non limitatif, tout ou partie des cavités a au moins une paroi 14 qui, selon une vue en coupe, forme un angle β compris entre 10° et 60° par rapport à une direction Z perpendiculaire à la texture 3.

A chaque fois qu'un rayon lumineux rencontre une paroi 14 de la cavité 12, celui-ci est réfléchi par ladite paroi 14. La direction de réflexion du rayon lumineux dépend de la direction initiale de ce rayon lumineux et de l'angle d'inclinaison de la paroi 14. Ainsi, en fonction de cette direction initiale et de cet angle d'inclinaison, le rayon lumineux peut être renvoyé vers une autre paroi 14 de la cavité. A l'inverse, le rayon lumineux peut être renvoyé à l'extérieur de la cavité, par exemple directement vers un observateur. Dans le premier cas, le rayon lumineux « se perd » dans la cavité et il ne sera plus perceptible par l'œil d'un observateur. Dans le second cas, l'observateur peut percevoir le rayon lumineux et la texture peut apparaître alors comme étant plus claire et donc moins en contraste vis-à-vis du reste de la bande de roulement. En choisissant une cavité 12 ayant au moins une paroi 14 qui forme un angle β compris entre 10° et 60°, on s'assure qu'une grande partie des rayons lumineux rentrant dans la cavité 12 va être absorbée par cette cavité sous l'effet de réflexions multiples à l'intérieur de la cavité. De cette manière, on améliore le contraste de la texture 3 (et donc de la surface de roulement 20) par rapport au reste du pneumatique 1 (notamment par rapport au flanc), tout en conservant le même taux d'occupation des cavités dans la texture. En outre, avec cette inclinaison de paroi, on améliore globalement la résistance de la texture, notamment lors de frottements répétés avec la chaussée.

L'invention n'est pas limitée aux exemples décrits et représentés et diverses modifications peuvent y être apportées sans sortir de son cadre.

Ainsi, selon une autre variante de réalisation non limitative, les lamelles 7 de la **figure 4** peuvent être discontinues. Elles présentent une partie plane entre elles. Elles peuvent en outre présenter entre elles des différences de section. De plus, les lamelles peuvent posséder des courbures ou des angles, notamment dans leur longueur. Elles peuvent en outre, être de longueur variable.

Ainsi, selon une autre variante de réalisation non limitative, les ouvertures 11 peuvent avoir la forme circulaire, carrée, ou encore polygonales (par exemple hexagonales) et les cavités 12 correspondantes une forme de cylindres, de parallélépipèdes, ou encore de polygones. Avec ces deux dernières structures (carrée ou polygonale), il est possible d'organiser plus facilement les ouvertures 11 les unes par rapport aux autres de sorte à limiter la surface des zones intermédiaires 13 entre ces ouvertures. Avec de telles formes d'ouvertures, on peut arriver plus aisément à des taux conséquents d'occupation des ouvertures.

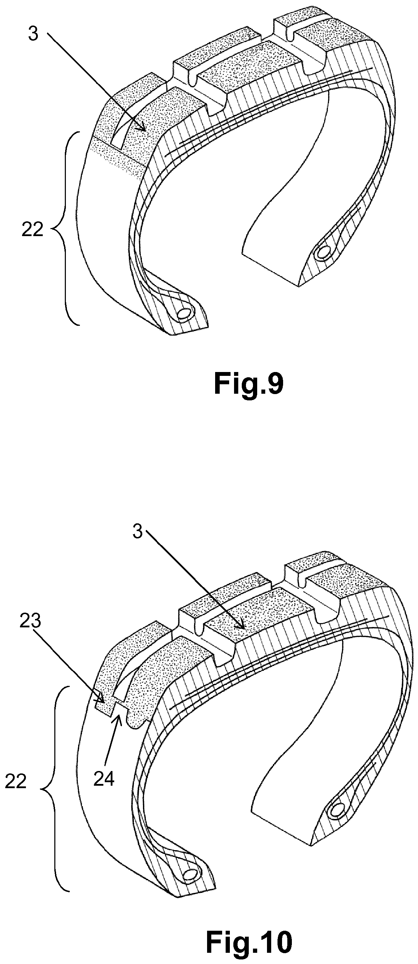

Les figures **9** et **10** présentent des variantes de réalisation dans lesquelles la texture 3 se prolonge sur une partie du flanc 22 du pneumatique. Sur la figure **10**, la texture 3 se prolonge pour former des zones texturées 23 interrompues par des zones non texturées 24, de sorte à constituer des moyens d'indication de surcharge et/ou de sous gonflage. Les zones texturées 23 du flanc peuvent prendre une forme géométrique particulière en vue de faciliter la visibilité de ces moyens d'indication de surcharge et/ou de sous-gonflage.

Ainsi, l'invention décrite présente notamment les avantages suivants :
- la texture 3 permet de masquer les lignes de niveau sur la surface de roulement ;
- la texture 3 (que ce soit avec des éléments en protubérance et/ou avec des éléments en creux) permet dans le même temps d'absorber la lumière et donc de donner un aspect plus noir à la surface de roulement 20 par rapport au reste de la bande de roulement 2. On améliore ainsi le contraste de la surface de roulement 20 par rapport au reste de la bande de roulement ; et
- La texture 3 permet d'obtenir un visuel de la surface de roulement 20 et/ou un toucher agréable au niveau de la surface de roulement 20 de type « velours ».

## Revendications

1. Pneumatique (1) en matériau caoutchoutique comprenant une bande de roulement (2), ladite bande de roulement comportant une surface de roulement (20) destinée à entrer en contact avec une chaussée lorsque le pneumatique roule, cette surface de roulement présentant vue en coupe une certaine courbure **caractérisé en ce que** la surface de roulement (20) comprend sur au moins 80% de sa surface une texture (3) faisant contraste avec le reste du pneumatique, cette texture (3) comportant une pluralité d'éléments (6, 7, 8, 9, 10) en protubérance ou en creux par rapport à la surface de roulement (20) **et en ce que** chaque élément s'étend perpendiculairement (θ=90°) à la surface de roulement (20) le long de la courbure de cette surface de roulement (20) et **en ce que** la texture a une luminosité, dite première luminosité L^{∗}1, comprise entre 6 et 15, et de préférence entre 8 et 9, et le reste du pneumatique a une luminosité, dite seconde luminosité L^{∗}2, supérieure ou égale à 18 et inférieure ou égale à 30, la valeur 100 de la luminosité représentant le blanc ou la réflexion totale et la valeur 0 représentant le noir ou l'absorption totale.

2. Pneumatique (1) selon la revendication 1, **caractérisé en ce que** au moins 30% des éléments (6, 7) en protubérance de la texture (3) fait un angle α supérieur à 40° par rapport à un plan tangent à la surface de roulement (20) et **en ce que** au plus 25% des éléments (6, 7) en protubérance de la texture (3) fait un angle α inférieur à 20° par rapport au plan tangent.

3. Pneumatique (1) selon l'une des revendications 1 ou 2, **caractérisé en ce que** tout ou partie des éléments en protubérance sont des brins (6) répartis dans la texture (3) selon une densité au moins égale à un brin par millimètre carré (mm²), chaque brin ayant une section moyenne comprise entre 0,003 mm² et 1 mm².

4. Pneumatique (1) selon l'une quelconque des revendications 1 à 3, **caractérisé en ce que** tout ou partie des éléments en protubérance sont des lamelles (7) sensiblement parallèles entre elles, le pas des lamelles dans la texture (3) étant au plus égal à 0,5 mm, chaque lamelle ayant une largeur moyenne comprise entre 0,03 mm et 0,25 mm.

5. Pneumatique (1) selon l'une quelconque des revendications 1 à 4, **caractérisé en ce que** tout ou partie des éléments en protubérance forme des parallélépipèdes (8) de côté (C) compris entre 0,05 mm et 0,5 mm, de hauteur (Hp) comprise entre 0,05 mm et 0,5 mm, la distance entre deux parallélépipèdes adjacents (8) dans la texture étant comprise entre 0,05 mm et 0.5 mm.

6. Pneumatique (1) selon l'une quelconque des revendications 1 à 5, **caractérisé en ce que** les éléments en protubérance (9) présentent dans la texture (3) des formes et des distances entre éléments en protubérance variables.

7. Pneumatique (1) selon la revendication 1, **caractérisé en ce que** les éléments en creux (10) forment des ouvertures (11) sur la surface de roulement (20) et la texture (3) comprend une pluralité d'ouvertures (11), lesdites ouvertures (11) étant réparties dans la texture (3) selon une densité au moins égale à une ouverture par millimètre carré (mm²), ces ouvertures (11) présentant sur la surface de roulement (20) des diamètres équivalents (Dt) compris entre 0,03 mm et 1,2 mm.

8. Pneumatique selon l'une quelconque des revendications 1 à 7, **caractérisé en ce que** la texture (3), présente sur la surface de roulement, s'étend sur un flanc (22) du pneumatique.

9. Pneumatique selon la revendication 8, **caractérisé en ce que** la texture forme sur le flanc du pneumatique des moyens (23) d'indication de surcharge et/ou de sous gonflage de ce pneumatique.

## Patentansprüche

1. Reifen (1) aus kautschukartigem Material, aufweisend ein Laufband (2), wobei das Laufband eine Lauffläche (20) aufweist, die bestimmt ist, mit einer Fahrbahn in Kontakt zu treten, wenn der Reifen rollt, wobei diese Lauffläche, im Schnitt gesehen, eine bestimmte Krümmung aufweist, **dadurch gekennzeichnet, dass** die Lauffläche (20) auf mindestens 80 % ihrer Fläche eine Textur (3) aufweist, die mit dem Rest des Reifens kontrastiert, wobei diese Textur (3) eine Vielzahl von Elementen (6, 7, 8, 9, 10) aufweist, die in Bezug auf die Lauffläche (20) vorstehend oder vertieft sind, und dass sich jedes Element senkrecht (θ=90°) zu der Lauffläche (20) entlang der Krümmung dieser Lauffläche (20) erstreckt und dass die Textur eine Luminosität, bezeichnet als erste Luminosität L*1, zwischen 6 und 15 und vorzugsweise zwischen 8 und 9 hat und der Rest des Reifens eine Luminosität, bezeichnet als zweite Luminosität L*2, größer oder gleich 18 und kleiner oder gleich 30 hat, wobei der Wert 100 der Luminosität weiß oder die Totalreflexion und der Wert 0 schwarz oder die totale Absorption repräsentiert.

2. Reifen (1) nach Anspruch 1, **dadurch gekennzeichnet, dass** mindestens 30 % der vorstehenden Elemente (6, 7) der Textur (3) einen Winkel α größer als 40° in Bezug auf eine zu der Lauffläche (20) tangentiale Ebene bilden und dass höchstens 25 % der vorstehenden Elemente (6, 7) der Textur (3) einen Winkel α kleiner als 20° in Bezug auf die tangentiale Ebene bilden.

3. Reifen (1) nach einem der Ansprüche 1 oder 2, **dadurch gekennzeichnet, dass** alle oder ein Teil der vorstehenden Elemente Stiele (6) sind, die in der Textur (3) in einer Dichte verteilt sind, die mindestens gleich einem Stiel pro Quadratmillimeter (mm²) entspricht, wobei jeder Stiel einen mittleren Querschnitt zwischen 0,003 mm² und 1 mm² hat.

4. Reifen (1) nach einem der Ansprüche 1 bis 3, **dadurch gekennzeichnet, dass** alle oder ein Teil der vorstehenden Elemente Lamellen (7) sind, die im Wesentlichen parallel zueinander sind, wobei die Teilung der Lamellen in der Textur (3) höchstens 0,5 mm beträgt, wobei jede Lamelle eine mittlere Breite zwischen 0,03 mm und 0,25 mm hat.

5. Reifen (1) nach einem der Ansprüche 1 bis 4, **dadurch gekennzeichnet, dass** alle oder ein Teil der vorstehenden Elemente Parallelepipede (8) mit der Seite (C) zwischen 0,05 mm und 0,5 mm, der Höhe (Hp) zwischen 0,05 mm und 0,5 mm bilden, wobei der Abstand zwischen zwei benachbarten Parallelepipeden (8) in der Textur zwischen 0,05 mm und 0,5 mm beträgt.

6. Reifen (1) nach einem der Ansprüche 1 bis 5, **dadurch gekennzeichnet, dass** die vorstehenden Elemente (9) in der Textur (3) variable Formen und Abstände zwischen vorstehenden Elementen aufweisen.

7. Reifen (1) nach Anspruch 1, **dadurch gekennzeichnet, dass** die vertieften Elemente (10) Öffnungen (11) auf der Lauffläche (20) bilden und die Textur (3) eine Vielzahl von Öffnungen (11) umfasst, wobei die Öffnungen (11) in der Textur (3) in einer Dichte von mindestens gleich einer Öffnung pro Quadratmillimeter (mm²) verteilt sind, wobei diese Öffnungen (11) auf der Lauffläche (20) äquivalente Durchmesser (Dt) zwischen 0,03 mm und 1,2 mm aufweisen.

8. Reifen nach einem der Ansprüche 1 bis 7, **dadurch gekennzeichnet, dass** sich die auf der Lauffläche vorhandene Textur (3) über eine Flanke (22) des Reifens erstreckt.

9. Reifen nach Anspruch 8, **dadurch gekennzeichnet, dass** die Textur auf der Flanke des Reifens Anzeigemittel (23) für Überlast und/oder Minderdruck dieses Reifens bildet.

## Claims

1. Tyre (1) made of rubber material, comprising a tread (2), said tread having a tread surface (20) intended to come into contact with a road surface when the tyre is being driven on, this tread surface having, in cross section, a certain curvature, **characterized in that** the tread surface (20) comprises, over at least 80% of its surface, a texture (3) contrasting with the rest of the tyre, this texture (3) having a plurality of elements (6, 7, 8, 9, 10) that protrude from or are recessed into the tread surface (20), **and in that** each element extends perpendicularly (θ=90°) to the tread surface (20) along the curvature of this tread surface (20) and **in that** the texture has a lightness, known as first lightness L^{∗}1, of between 6 and 15, and preferably between 8 and 9, and the rest of the tyre has a lightness, known as second lightness L^{∗}2, greater than or equal to 18 and less than or equal to 30, the value 100 of the lightness represents white or total reflection and the value 0 represents black or total absorption.

2. Tyre (1) according to Claim 1, **characterized in that** at least 30% of the protruding elements (6, 7) of the texture (3) form an angle α of greater than 40° with respect to a plane tangent to the tread surface (20), and **in that** at most 25% of the protruding elements (6, 7) of the texture (3) form an angle α of less than 20° with respect to the tangent plane.

3. Tyre (1) according to either of Claims 1 or 2, **characterized in that** all or some of the protruding elements are strands (6) distributed through the texture (3) at a density at least equal to one strand per square millimetre (mm²), each strand having a mean cross section of between 0.003 mm² and 1 mm².

4. Tyre (1) according to any one of Claims 1 to 3, **characterized in that** all or some of the protruding elements are substantially mutually parallel lamellae (7), the spacing of the lamellae in the texture (3) being at most equal to 0.5 mm, each lamella having a mean width of between 0.03 mm and 0.25 mm.

5. Tyre (1) according to any one of Claims 1 to 4, **characterized in that** all or some of the protruding elements form parallelepipeds (8) having a side length (C) of between 0.05 mm and 0.5 mm and a height (Hp) of between 0.05 mm and 0.5 mm, the distance between two adjacent parallelepipeds (8) in the texture being between 0.05 mm and 0.5 mm.

6. Tyre (1) according to any one of Claims 1 to 5, **characterized in that** the protruding elements (9) have variable shapes and distances between protruding elements in the texture (3).

7. Tyre (1) according to Claim 1, **characterized in that** the recessed elements (10) form openings (11) in the tread surface (20) and the texture (3) comprises a plurality of openings (11), said openings (11) being distributed through the texture (3) at a density at least equal to one opening per square millimetre (mm²), these openings (11) having, at the tread surface (20), equivalent diameters (Dt) of between 0.03 mm and 1.2 mm.

8. Tyre according to any one of Claims 1 to 8, **characterized in that** the texture (3) present on the tread surface extends onto one sidewall (22) of the tyre.

9. Tyre according to Claim 8, **characterized in that** the texture forms, on the sidewall of the tyre, means (23) for indicating overload and/or underinflation of this tyre.
